# EUROPEAN PATENT SPECIFICATION

(11) **EP 2 586 656 B1**
(45) Date of publication and mention of the grant of the patent: **13.08.2014**
(21) Application number: 11186440.1
(22) Date of filing: 25.10.2011
(51) Int. Cl.: B60N 3/00

(54) **Support system of a vehicular foldaway table, in particular for industrial or commercial vehicles**
Stützsystem für einen Fahrzeugklapptisch, insbesondere für Industrie- und Nutzfahrzeuge
Système de support de table rétractable véhiculaire, en particulier pour les véhicules industriels ou commerciaux

(43) Date of publication of application: 01.05.2013
(73) Proprietor: Iveco S.p.A., 10156 Torino (IT)
(72) Inventor: Raviola, Claudio, 10040 RIVALTA DI TORINO (IT)
(74) Representative: Cinquantini, Bruno

(56) References cited:
- DE-A1- 10 039 305
- DE-C1- 4 225 689

## Description

### Application field of the invention

The present invention refers to the field of the internal furnishing of vehicle cabins, in particular of industrial and commercial vehicles. More precisely the invention refers to a support system for a vehicular foldaway table, in particular for industrial and commercial vehicles.

### Description of the prior art

Making vehicle furnishing is particularly complex since the accessories in the vehicle are required to be at the same time functional, robust and handy, but above all they are required to occupy a small space.

It is complex to provide appropriate support seats for the foldaway table.

When the support arms of a foldaway table are inserted in the respective seats, for example, in the vehicle dashboard, the table must be supported in an optimal way, namely limiting the transmission of vibrations and at the same time supporting the table in stable way.

On the other hand, for aesthetic reasons, such seats should be easily concealed when the table is stored in a specially provided compartment.

A support system of a vehicular foldaway table according to the preamble of claim 1 is disclosed in DE 10039305.

### Summary of the invention

Therefore the aim of the present invention is to provide a support system of a vehicular foldaway table, in particular for industrial and commercial vehicles, which is at the same time robust and able to keep the table firmly connected to the vehicle cabin, but which is also able to limit the vibrations transmitted to the table, being at the same time not too much visible when the foldaway table is not in use.

It is an object of the present invention to provide a support system of a vehicular foldaway table, in particular for industrial and commercial vehicles, in accordance with claim 1.

In particular, the second end of the tubular support allows said openable lid to move freely between an open and a closed position.

For this purpose said second end may be distanced from the stud, in order to allow the opening of the lid, or it may be placed side by side with it, or it may adhere to the stud and be shaped to accommodate the lid in open position. When the tubular support is distanced from the stud, it is preferable that the second end is flared towards the stud in order to simplify the engagement of the foldaway table in the support system.

The tubular support may also be internally covered with a resilient material, in order to limit the vibrations transmitted from the vehicle to the foldaway table. Another aim of the present invention is to provide an industrial or commercial vehicle that integrates the aforementioned support system.

It is an object of the present invention to provide an industrial or commercial vehicle comprising a support system.

Such support system is particularly suitable to receive, in general, vehicle parts and accessories that can be removed and stored, such as for example a foldaway table, preferably of the folding type.

The claims are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows an axonometric view of a vehicle dashboard comprising a support system of a vehicular foldaway table, supporting a vehicular foldaway table;
figures 2a and 2b show two axonometric views, respectively front and rear, namely from within the vehicle dashboard, showing an interaction between the support system and an arm of the foldaway table of figure 1;
figure 3 shows the same view as figure 2b, with an arm of the foldaway table of figure 1 shown in transparency, during its insertion in the support system;
figure 4 shows the same view as figure 2b, with a further component shown in transparency;
figure 5 shows a section side view of what shown in figure 4;
figure 6 shows an axonometric view of the vehicle dashboard of figure 1 in inactive configuration;

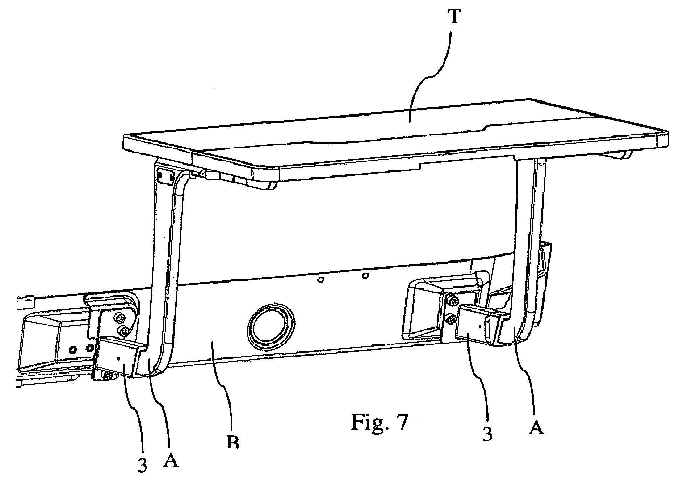

figure 7 shows another axonometric view of the vehicle dashboard of figure 1, with removed parts.

In the figures the same reference numbers and letters identify the same elements or components.

### Detailed description of preferred embodiments of the invention

The support system of a foldaway table according to the present invention comprises
a stud 1 suitable to be fixed to surround a through opening O on a visible surface of an internal covering D of the vehicle cabin. Such stud 1 comprises an openable lid 2 hinged to the stud in order to obstruct said through opening O.

In correspondence of such through opening O a tubular support 3 having two opposite ends 31, 32 is arranged inside said covering D. The first end 31 is suitable to be fixed to a rigid part B of the cabin and a second end 32 faces said through opening O, so that the through opening defines a virtual extension of the second end 32 of the tubular support 3.

In other words, at least the end part 32 of the tubular support 3 has a longitudinal development along an axis, on which the centroid of the through opening lies.

The symmetry of the tubular support 3 may be of any type, among which axial or rotational. The arm A of the foldaway table T, intended to be supported by the support system, has a shape complementary to the recess defined by the tubular support 3.

The covering D may define, as for example shown in the figures, the dashboard of an industrial or commercial vehicle.

Advantageously, inserting an arm A into the through opening O through the stud 1 determines the opening of the lid 2 towards the inside of the covering D and the subsequent engagement of the arm A in the recess of the tubular support 3.

In order to avoid interfering with the opening of the lid 2, the second end 32 of the tubular support 3 may be appropriately distanced from the stud 1, or it may be placed side by side with the stud and be shaped in order to accommodate the lid 2 in open position.

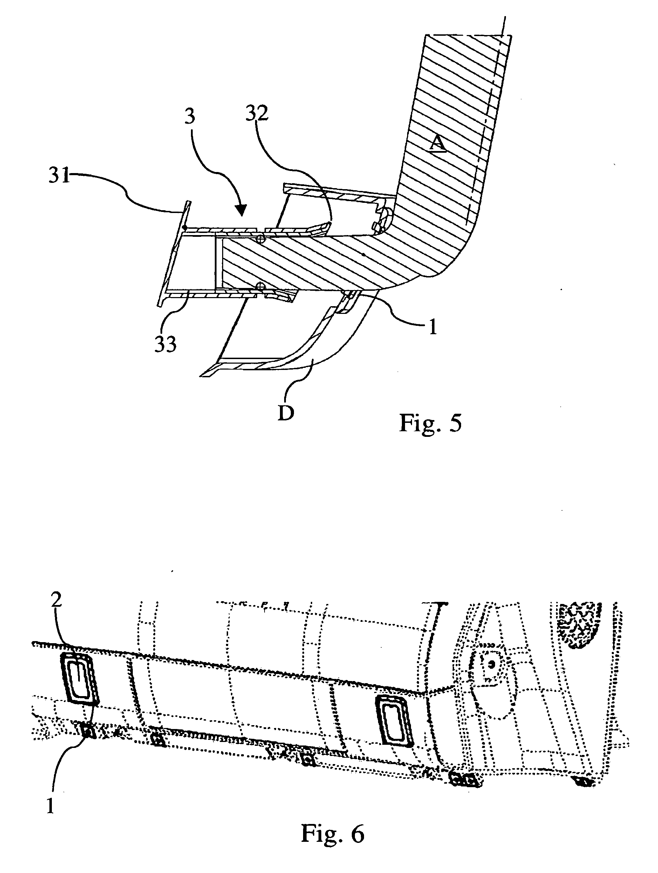

When the end 32 of the tubular support 3 is distanced from the stud 1, it may have a flared shape, as shown in figure 5, namely it widens towards the stud 1, in order to simplify the centering of the engagement between the arm A and the tubular support 3.

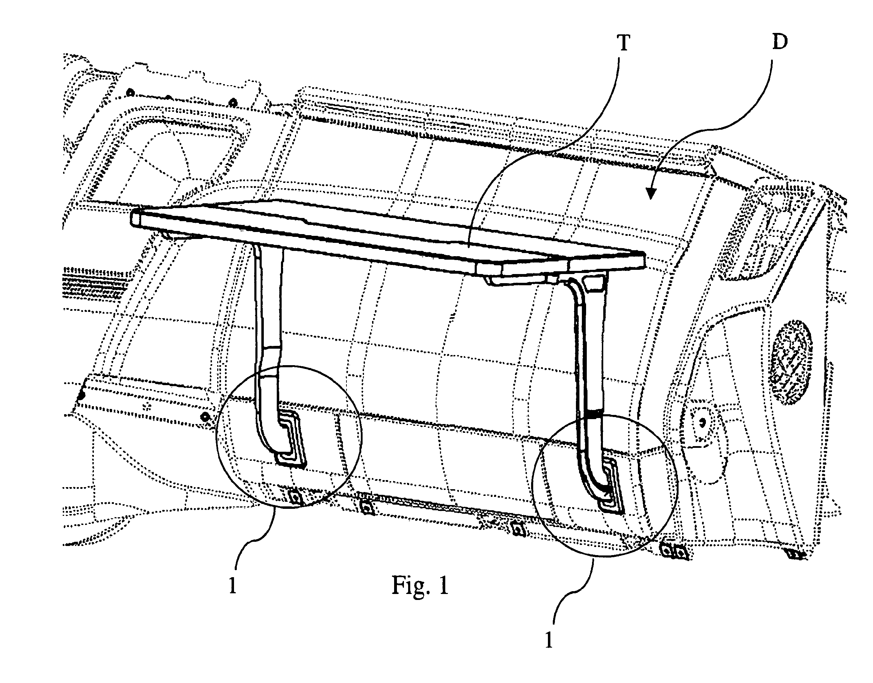

With particular reference to figure 1, the support system may comprise two studs 1 with respective tubular supports 3 inside the vehicle dashboard, in order to support a pair of arms A of a foldaway table T.

In order to limit the transmission of vibrations to the foldaway table, each tubular support 3 may be internally covered 33 with resilient material, such as rubber or caoutchouc.

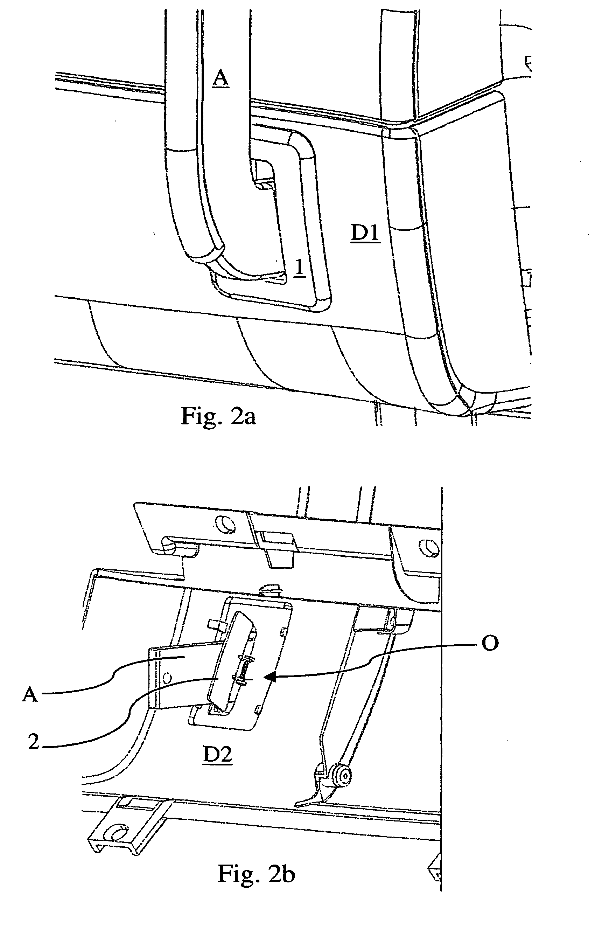

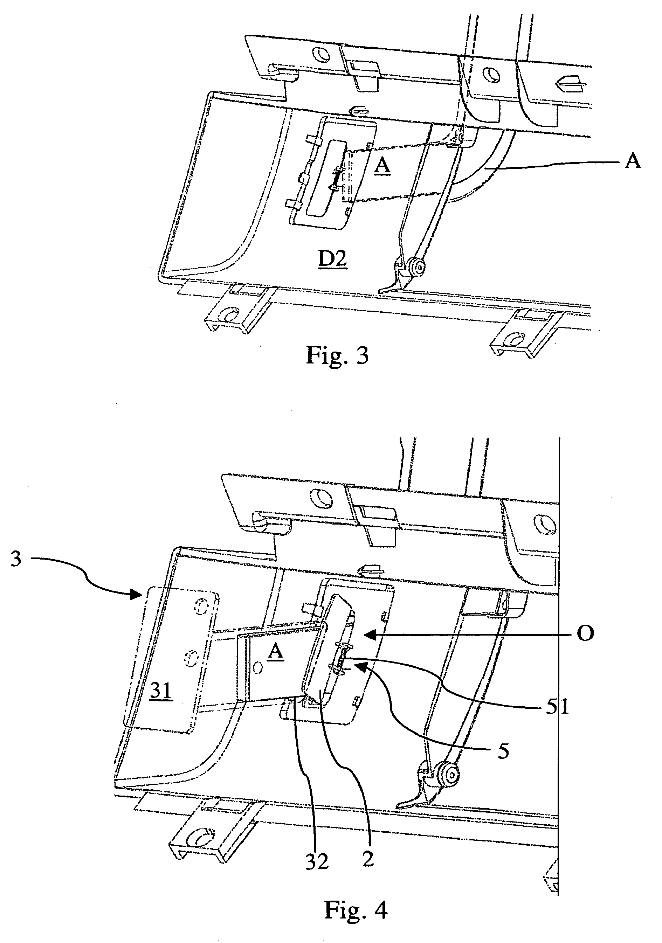

With reference to figures 2b, 3 and 4, the lid 2 is hinged to the stud, in the part that faces the inside of the covering, namely in the same way as the internal surface D2, and around the hinge axis 5 a pressure spring 51 is wound forcing the lid 2 to close, obstructing the through opening O of the covering and thus concealing the presence of the support itself.

Advantageously, as shown in figure 5, when the table is not supported by the support system, the through openings O of the covering D are concealed by the lids 2.

Advantageously, the tubular shape of the supports 3 guarantees a high stability to each one of the arms A of the table T. The latter, indeed, being of the foldaway type, may have reciprocally movable arms which are reciprocally fixed when they are inserted in the support system, cooperating with it.

## Claims

1. Support system of a vehicular foldaway table (T), in particular for industrial and commercial vehicle, the vehicle having a cabin comprising a rigid body (B) which inside the cabin is covered by a covering (D); the covering (D) having a visible surface (D1) and an internal surface (D2) facing said rigid body (B) and at least a through opening (O) between said surfaces (D1, D2) **characterised in that** the support system comprises:
- at least a stud (1) suitable to be fixed on said visible surface (D1) in order to surround said through opening (O) and comprising an openable lid (2) hinged to the stud (1) in order to obstruct said through opening (O) and
- at least a respective hollow tubular support (3) with two opposite ends (31, 32) and arranged inside said covering (D), with a first end (31) suitable to be fixed to said rigid body and a second end (32) facing said through opening (O).

2. Support system according to claim 1, wherein said second end (32) allows said openable lid (2) to move freely between an open and a closed position.

3. Support system according to claim 2, wherein said second end (32) is distanced from said stud (1) in order to allow the opening of the openable lid (2).

4. System according to claim 3, wherein said second end (32) is flared towards the stud (1).

5. System according to claim 2, wherein said second end (32) is placed side by side or adheres to the stud (1) and is shaped in order to accommodate the lid (2) in open position.

6. System according to any of the previous claims, wherein said tubular support (3) is covered internally with resilient material (33).

7. Industrial or commercial vehicle comprising at least a support system according to one of the previous claims.

8. Industrial vehicle according to claim 7, comprising a foldaway table (T) having a pair of arms (A) and respective support systems to support the arms (A).

## Patentansprüche

1. Stütz-System eines Klapp-Tisches (T) für ein Fahrzeug, insbesondere für ein Industrie- und Nutzfahrzeug, wobei das Fahrzeug eine Kabine, einen starren Körper (B) umfassend, aufweist, der innerhalb der Kabine mit einer Abdeckung (D) abgedeckt ist; wobei die Abdeckung (D) eine sichtbare Oberfläche (D1) und eine innere Oberfläche (D2), die zu dem starren Körper (B) zeigt, und wenigstens eine Durchgangs-Öffnung (O) zwischen den Oberflächen (D1, D2) aufweist, **dadurch gekennzeichnet, dass** das Stütz-System umfasst:
wenigstens einen Beschlag (1), der geeignet ist, auf der sichtbaren Oberfläche (D1) befestigt zu werden, um die Durchgangs-Öffnung (O) zu umgeben, und der einen öffenbaren Deckel (2) umfasst, der an dem Beschlag (1) angelenkt ist, um die Durchgangs-Öffnung (O) zu versperren; und
wenigstens jeweils eine hohle rohrförmige Stütze (3) mit zwei gegenüberliegenden Enden (31, 32) und angeordnet innerhalb der Abdeckung (D), wobei ein erstes Ende (31) geeignet ist, an dem starren Körper fixiert zu werden, und ein zweites Ende (32) zu der Durchgangs-Öffnung (O) zeigt.

2. Stütz-System nach Anspruch 1, wobei das zweite Ende (32) ermöglicht, dass sich der öffenbare Deckel (2) frei zwischen einer offenen und einer geschlossenen Position bewegt.

3. Stütz-System nach Anspruch 2, wobei das zweite Ende (32) von dem Beschlag (1) beabstandet ist, um das Öffnen des öffenbaren Deckels (2) zu erlauben.

4. System nach Anspruch 3, wobei das zweite Ende (2) in Richtung auf den Beschlag (1) aufgeweitet ist.

5. System nach Anspruch 2, wobei das zweite Ende (32) Seite an Seite neben dem Beschlag (1) platziert ist oder an dem Beschlag (1) haftet und geformt ist, um den Deckel (2) in einer offenen Position unterzubringen.

6. System nach irgendeinem der vorangehenden Ansprüche, wobei die rohrförmige Stütze (3) innen mit einem elastischen Material (33) bedeckt ist.

7. Industrie- oder Nutz-Fahrzeug, umfassend wenigstens ein Stütz-System gemäß irgendeinem der vorangehenden Ansprüche.

8. Industrie-Fahrzeug nach Anspruch 7, umfassend einen Klapp-Tisch (T) mit einem Paar Armen (A) und jeweiligen Stütz-Systemen zum Stützen der Arme (A).

## Revendications

1. Système de support d'une table pliante véhiculaire (T), en particulier pour un véhicule industriel et commercial, le véhicule ayant une cabine comprenant un corps rigide (B) qui, à l'intérieur de la cabine, est recouvert par un recouvrement (D) ; le recouvrement (D) ayant une surface visible (D1) et une surface interne (D2) orientée vers ledit corps rigide (B) et au moins une ouverture traversante (O) entre lesdits surfaces (D1, D2), **caractérisé en ce que** le système de support comprend :
- au moins un montant (1) apte à être fixé sur ladite surface visible (D1) pour entourer ladite ouverture traversante (O) et comprenant un couvercle pouvant être ouvert (2) articulé au montant (1) pour fermer ladite ouverture traversante (O) et
- au moins un support tubulaire creux respectif (3) avec deux extrémités opposées (31, 32) et agencé à l'intérieur dudit recouvrement (D), une première extrémité (31) étant apte à être fixée audit corps rigide et une seconde extrémité (32) faisant face à ladite ouverture traversante (O).

2. Système de support selon la revendication 1, dans lequel ladite seconde extrémité (32) permet audit couvercle pouvant être ouvert (2) de se déplacer librement entre une position ouverte et une position fermée.

3. Système selon la revendication 2, dans lequel ladite seconde extrémité (32) est espacée dudit montant (1) pour permettre l'ouverture du couvercle ouvrant (2).

4. Système selon la revendication 3, dans lequel ladite seconde extrémité (32) est évasée vers le montant (1) .

5. Système selon la revendication 2, dans lequel ladite seconde extrémité (32) est placée côté à côté ou adhère au montant (1) et est configurée pour recevoir le couvercle (2) dans la position ouverte.

6. Système selon l'une quelconque des revendications précédentes, dans lequel ledit support tubulaire (3) est recouvert intérieurement avec un matériau résilient (33).

7. Véhicule industriel ou commercial comprenant au moins un système de support selon l'une quelconque des revendications précédentes.

8. Véhicule industriel selon la revendication 7, comprenant une table pliante (T) ayant une paire de bras (A) et des systèmes de support respectifs pour supporter les bras (A).
